(19)

**Europäisches Patentamt**
**European Patent Office**
**Office européen des brevets**

(11) **EP 4 352 575 B1**

(12) **EUROPEAN PATENT SPECIFICATION**

(45) Date of publication and mention
of the grant of the patent:
**31.12.2025 Bulletin 2026/01**

(21) Application number: **22733539.5**

(22) Date of filing: **27.05.2022**

(51) International Patent Classification (IPC):
**G05B 19/042** $^{(2006.01)}$     **G05B 23/02** $^{(2006.01)}$
**G05B 13/02** $^{(2006.01)}$     **G05B 17/02** $^{(2006.01)}$
**G06N 3/08** $^{(2023.01)}$     **G06N 20/10** $^{(2019.01)}$

(52) Cooperative Patent Classification (CPC):
**G05B 19/0426; G05B 13/027; G05B 17/02;**
**G05B 23/024; G06N 3/045; G06N 3/0499;**
**G06N 3/08; G06N 3/09;** G05B 23/0243

(86) International application number:
**PCT/EP2022/064391**

(87) International publication number:
**WO 2022/258395 (15.12.2022 Gazette 2022/50)**

(54) **MONITORING AND/OR CONTROLLING A PLANT VIA A MACHINE-LEARNING REGRESSOR**

VERFAHREN, COMPUTERIMPLEMENTIERTER REGRESSOR UND STEUERVORRICHTUNG ZUR
SIMULATION UND/ODER STEUERUNG EINER ANLAGE, VERFAHREN ZUM TRAINIEREN EINES
MASCHINENLERNENDEN REGRESSORS

PROCÉDÉ, RÉGRESSEUR MIS EN ŒUVRE PAR ORDINATEUR ET DISPOSITIF DE COMMANDE
POUR SIMULER ET/OU COMMANDER UNE INSTALLATION, PROCÉDÉ D'APPRENTISSAGE
D'UN RÉGRESSEUR D'APPRENTISSAGE AUTOMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **07.06.2021 EP 21177958**

(43) Date of publication of application:
**17.04.2024 Bulletin 2024/16**

(73) Proprietor: **BASF SE**
**67056 Ludwigshafen am Rhein (DE)**

(72) Inventors:
• **RUEHL, Phillip**
**01986 Schwarzheide (DE)**

• **BADINSKI, Alexander**
**67056 Ludwigshafen (DE)**
• **HEIDEL, Gennadij**
**01986 Schwarzheide (DE)**

(74) Representative: **BASF IP Association**
**BASF SE**
**GBI - Z078**
**67056 Ludwigshafen (DE)**

(56) References cited:
**EP-A1- 3 696 619**     **WO-A1-2020/205339**
**WO-A1-2020/227383**     **WO-A2-2020/058237**
**DE-A1- 102004 028 002**

**Description**

The present disclosure relates to methods, regressors, in particular involving artificial neural network systems, and control devices for simulating, monitoring and/or controlling a plant. Further, methods for training artificial neural network systems are provided. **In** particular, models based on artificial neural networks (ANN) are depicted that are suitable for simulating batch processes where educts are transformed into products by a batch-processing unit and which are suitable to monitoring and/or controlling a batch plant.

**In** batch processing or batch plants, the production of multiple products occurs with the same set of equipment or processing units, for example a chemical or biological reactor. On the one hand, it is desirable to optimize a particular process involving certain educts that are processed into the desired product. On the other hand, scheduling a batch operation using a single processing unit can be improved if processes are accurately modeled and simulated.

**In** conventional approaches, simulations of chemical reactions occurring in a batch process use so-called whitebox models that are based on rigorous models or first principles. Whitebox models generally require a large amount of computational power and resources due to the complex physiochemical systems to be modelled involving non-linear equations.

Another approach are so-called blackbox models that were developed in the past and rely on machine-learning concepts. For example, neural networks can be used to predict specific properties of a product or its quality based on input data including process characteristics and educt characteristics. Such neural networks need to be trained with a plurality of data sets that sometimes are not available. Further, a conventional blackbox model based on an artificial neural network needs to be retrained, if conditions in the batch plant to be modeled, a desired product quality and/or the educt characteristics change, thus rendering conventional approaches inflexible.

A further approach are hybrid models as combinations of whitebox models and blackbox models. Document WO 2020/227383 A1 discloses computer-based process modeling and simulation methods and systems combining first principles models and machine learning models to benefit where either model is lacking. **In** one example, measured input values are adjusted by first principles techniques. A machine learning model of the chemical process of interest is trained on the adjusted values. **In** another example, a machine learning model represents the residual between a first principles model prediction and empirical data. Residual machine learning models correct physical phenomena predictions in a first principles model of the chemical process. **In** another example, a first principles simulation model uses the process input data and predictions of the machine learning model to generate simulated results of the chemical process.

Document WO 2020/058237 A2 discloses a method and a system capable of predicting values for product quality attributes of a chemical compound or of a formulation thereof as an outcome of a multistep production process, wherein the whole process or process steps are characterized by process parameters. **It** is achieved by executing a multivariate data analysis of the process data in a quality-prediction model, which specifies or represents mathematical relationships between quality attributes and process parameters of the production process or of sub-processes thereof. The quality-prediction model is obtained by mathematical modelling of historical process data, most preferred using neural network models in combination with empirical process knowledge gained over time.

**It** is an object of the present disclosure to provide improved methods and systems for monitoring and/or controlling plants.

Aspect of the independent claims solve this problem.

This disclosure provides a computer-implemented regressor for simulating, monitoring and/or controlling a plant. The plant can be implemented to receive one or more educts having associated educt quality parameters, to process said educt(s) wherein the process has associated process parameters, and to output a product having associated product quality parameters. The regressor comprises at least two regressor units, each regressor unit comprising an input for receiving input data, and an output for outputting output data. Within the regressor, a first regressor unit is implemented to receive said educt quality parameters and to output at least one educt impact parameter; and a second regressor unit is implemented to receive said educt impact parameter and said process parameters and to output at least one product quality parameter. The regressor and/or regressor units are based on machine-learning principles.

**In** embodiments an artificial neural network (ANN) system for simulating, monitoring and/or controlling a batch plant is disclosed. The batch plant is implemented to receive one or more educts having associated educt quality parameters, to process said educts wherein the process has associated process parameters, and to output a product having associated product quality parameters. The ANN system comprises at least two ANNs, each ANN comprising an input layer having input nodes for receiving input data and an output layer having output nodes for outputting output data. The first ANN is implemented to receive said educt quality parameters and to output at least one educt impact parameter. The second ANN is implemented to receive said educt impact parameter and said process parameters and to output at least one product quality parameter.

The applicant found that nested or concatenated ANNs are suitable regressors for solving separable problems posed by batch plants. Thus, the disclosed regressor can be implemented as an ANN system involving ANNs.

In the proposed ANN system, data relating to the educts, i.e. educt quality parameters, and process data relating to the actual process performed in the batch plant, i.e. process parameters, are considered separately. The first ANN models/simulates the impact of educt properties in terms of the educt quality parameters, and the second ANN models/simulates the, e.g. chemical or biological, process, which is at least partially driven by process parameters that can be observed or set during the operation of the batch plant. The second ANN also receives input from the first ANN so that product quality parameters can be reliably predicted.

It is understood that a respective ANN includes an input layer having input nodes for receiving input data and an output layer having output nodes for outputting output data. The ANNs may also comprise hidden layers between the input layer and the output layer. Generally, a respective ANN is characterized by configuration data at least including bias values and weight values for each node within the ANN. This configuration data is obtained by training the respective ANN.

One may also refer to a trained ANN as a model for the chemical reacting occurring in a process unit of the batch plant. Trained ANNs are also considered regressors for the underlying problem to map input data (e.g. educt and process characteristics) onto output or target data (e.g. product characteristics).

The proposed approach of separating the complex problem of mapping a variety of educt quality parameters and process parameters onto a product quality parameter allows for an efficient use of sparse data sets in training the ANNs or models, respectively. Embodiments of the ANN system allow for sharing training data sets used for different products produced by the same or similar batch plant. **In** particular, the process model or second ANN can benefit from trained first ANNs or educt models for similar or same educts used in different batch plant processes. For example, the ANN system allows to change the educt model by updating configuration data for the first ANN, if an educt is changed but the overall batch process modeled by the second ANN is essentially unaltered. Hence, the trained partial ANN of the unchanged component in a batch plant process remains. Doing so, the amount of required training data is reduced with respect to a conventional artificial neural network that needs to be completely trained with sets of educt quality parameters and process parameters to target or model product quality parameters.

**It** occurs that, according to investigations of the applicant, the resulting model or neural network system for simulating a batch plant is robust against noise in training data. **In** embodiments, the partial blackbox model in terms of the first ANN or educt model describes an impact of the educts being independent of the plant or chemical process set-up. Hence, the first ANNs can be used in connection with alternative batch plants or batch plant units that are modeled by alternative second ANNs. Thus, in particular, the trained first ANNs can be recycled and only sparse training data for setting up the second ANN or process model for the alternative batch plant needs to be used.

**In** embodiments the output product quality parameters are generated in a computer-readable form, displayed and/or used to control, schedule, or adapt the batch plant, in particular by a control device.

**In** embodiments, the second ANN is based on training data sets including process parameters and product target variables corresponding to product quality parameters associated to a respective product. For example, process parameters can include a measured observable during the chemical reaction, a temperature value, a maximum temperature value, a time span, a reaction span, a storage time of a catalyst, a number of free isocyanate groups or other characteristics of a time series. One may contemplate of other process parameters that influence the chemical reaction in the batch reactor.

Product quality parameters may include viscosity values of the product, a hardness value, a roughness value, drug interaction effects, a pH value or a solubility. One may contemplate of other product quality parameters that characterize the obtained product or the product during the chemical process or reaction in the batch plant.

**In** embodiments of the ANN system, the first ANN is trained based on training data sets including the educt quality parameters and a residual of the trained second ANN as target variable for the educt impact parameter, both the educt quality parameter and the residual corresponding to a respective product. The residual or prediction error of the second ANN can be due to sparse availability of training data sets and is used to train the first ANN modeling the educt quality. The educt quality parameter may include a viscosity value, a hydroxyl value, a concentration value, a color parameter and the like. One may contemplate of other educt quality parameters.

The ANN system can be seen as a concatenated system of first and second ANNs. **In** embodiments of the ANN system, a system comprises:

a plurality of first ANNs wherein each ANN of the first ANNs correspond to an educt and is implemented to receive corresponding educt quality parameters and implemented to output at least one corresponding educt impact parameter; and

a plurality of second ANNs wherein each ANN of the second ANNs corresponds to a process for producing a product and is implemented to receive corresponding process parameters and a combination of educt impact parameters from the first ANNs and implemented to output a corresponding product quality parameter.

One may contemplate associating the first ANNs to different educts and the second ANNs to batch processes having specific associated process parameters. The outputs from the first ANNs can be combined, weighted and fed into the second ANNs. For example, each second ANN may receive a linear combination of educt impact parameters from the first ANNs. As a result, the ANN system allows to predict product quality parameters for products that are produced in the batch process by combining one or more of the educts wherein the educts are characterized by the educt quality parameters.

It is understood that "an ANN corresponding to an action" is interpreted as the ANN modeling the action. Hence, "a second ANN corresponding to a certain product" is an ANN that is trained and setup to output approximate product quality parameters in response to process parameters associated to the production process for the given product.

In embodiments of the ANN systems, at least one of the ANN is a feed-forward ANN. In embodiments, Bayesian neural networks can be used as ANNs. One may contemplate that at least one ANN further comprises hidden nodes between input and output nodes.

According to an aspect of this disclosure, a control device for controlling a batch plant is proposed. The batch plant is implemented to receive one or more educts having associated educt quality parameters, to process said educts wherein the process has associated process parameters, and to output a product having one or more associated product quality parameters. The control device comprises an ANN system as disclosed above or below with respect to embodiments, wherein the control device is implemented to adapt a process as a function of the product quality parameter output from the second ANN in response to adapted process parameters. For example, based on the ANN system's simulation of the process within the batch plant, the process and thus the associated process parameters are changed by the control device to obtain a desired product quality.

In embodiments of the control device, the control device comprises a computer processing device implemented to perform operations implementing the ANN system, and to carry out an optimization algorithm for adapting process parameters such that the product quality parameters output from the second ANN correspond to a predetermined product quality.

Other aspects of this disclosure provide for a method for training a regressor, e.g. in terms of an ANN system as disclosed above or below with respect to certain embodiments. The training method comprises at least one of the steps of:

> providing for a first and at least one second product, a plurality of trainings data sets, each training data set including educt quality parameters, process parameters, and a product target variable corresponding to a product quality parameter associated to the product;
> training the second ANN based on training data subsets including the process parameters and the product target variables corresponding to a first product thereby obtaining a first residual for each training data subset;
> training the second ANN based on training data subsets including the process parameters and the product target variables corresponding to at least one further product, thereby obtaining a second residual for each training data subset; and
> training the first ANN based on training data subsets including the educt quality parameters and the residual as target variable for the educt impact parameter, both corresponding to the first product and based on further training data subsets including the educt quality parameters and the residual as target variable for the educt impact parameter, both corresponding to the at least one further product.

The training method may include training the first ANN based on the training data set for all products containing a specific educt including the quality parameters for this educt and the residuals from the previous (training )step as the targets. This is preferably done for each educt.

According to aspects of the training method above, the first ANN is trained to provide the residuals of the second ANN, thus reducing the need of a large number of training data subsets or sets.

In embodiments of the training method, for each product, the step of training the second ANN based on trainings data subsets including the process parameters, the educt impact parameters output from the trained first ANN in response to the educt quality parameters associated to the educt use for producing the respective product and the product target variable corresponding to the product quality parameter associated to the respective product is carried out. Hence, the second ANNs receive additional input from the trained first ANN.

In embodiments of the training method, the step of training the first ANN and the step of training the second ANN based on training data subsets including the process parameters, the educt impact parameter output from the trained first ANN in response to the educt quality parameters associated to the educt use for producing the respective product, and the product target variable corresponding to the product quality parameter associated to the respective product are repeatedly carried out.

In embodiments, the training method further comprises:

> generating said training data sets by operating the batch plant and measuring process parameters and product quality parameters; and/or
> generating said training data sets deploying a whitebox-numerical model for simulating batch plant process based on educt quality parameters and generating process parameters and product quality parameters.

According to an aspect of this disclosure, a method for simulating, monitoring and/or controlling a batch plant, wherein the batch plant is implemented to receive one or more educts having associated educt quality parameters, to process said educts wherein the process has associated process parameters, and to output a product having associated product quality parameters, the method comprises the step of using an ANN system described above or below with respect to certain embodiments, wherein the ANN system is trained according to the training method as disclosed above or below with respect to embodiments.

It is understood that regressor units are not necessarily implemented as ANNs, and that this disclosure also encompasses suitable configurations of other regressor units. Hence, throughout this disclosure the expression "ANN" may be replaced by "regressor unit" to fully appreciate the scope of the invention. A regressor unit can be implemented as a computer-implemented regression method, e.g. in terms of a software function or service.

According to a further aspect, this disclosure relates to a computer program product comprising computer-readable instructions causing a computing system including one or more processing devices, in response to executing the machine-readable instructions, to perform the above-described methods and functions for simulating, monitoring and/or controlling a batch plant.

In embodiments, a computer-program product comprises a program code for executing the above-described methods and functions by a computerized control device when run on at least one control computer. A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below in regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

Fig. 1     shows a schematic diagram of an embodiment for batch plant.

Fig. 2     shows a schematic diagram of a first embodiment of an ANN system.

Fig. 3     shows a schematic diagram of a second embodiment of an ANN system.

Fig. 4     shows a flow chart involving method steps for training embodiments of the ANN system.

Fig. 5     shows a schematic diagram of a third embodiment of an ANN system.

Fig. 6     shows an algorithm for training embodiments of the ANN system.

Fig. 7     shows a schematic diagram of an embodiment for a control system for a batch plant.

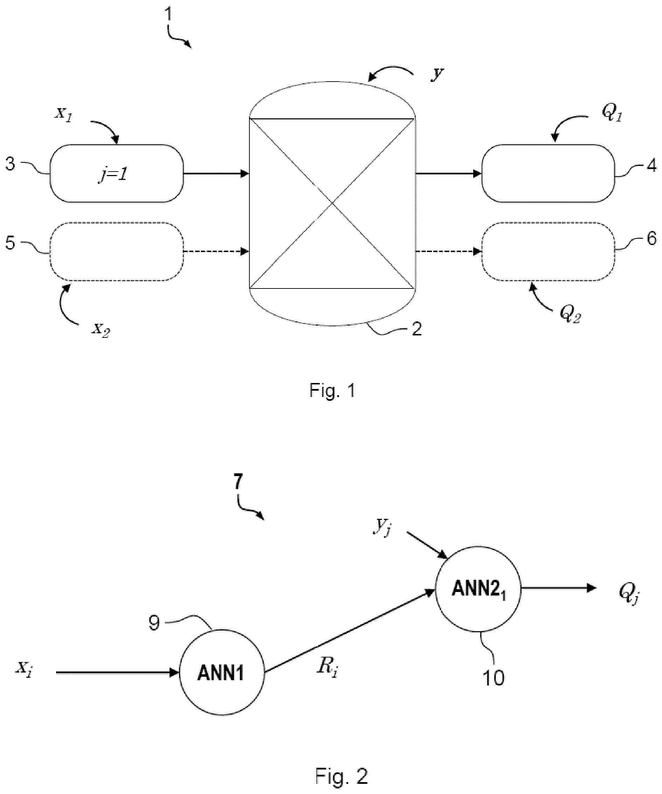

Fig. 1 shows a schematic diagram of an embodiment for a batch plant. The batch plant 1 comprises a processing unit 2 which is, for example a continuously stirred tank reactor. The tank reactor 2 can be used to process various educts under specific process parameters to produce a product. Product can be, for example intermediate products of a pre-polymer synthesis, polyols, coatings, or other chemical, pharmaceutical or biological compositions.

In the example of Fig. 1, a single input educt 3 is indicated which undergoes processing in the reactor 2 and results in a product 4. One may attribute specific educt quality parameters to the educt 3 which is indicated by the label $x_1$. Educt quality parameters may include specific properties of the educt 3, for example a reactivity, a hydroxyl number or specific isomers. In the reactor 2, a chemical reactional process takes place that may be characterized by process parameters y, for example a process parameter can be a temperature profile or time series of an observable within the reactor 2. After the reactional process in reactor 2 is finished or stopped, product 4 can be retrieved having specific quality parameters indicated as $Q_1$. For example, the quality parameter $Q_1$ may refer to the purity or concentration of a substance within the product 4.

The batch processing unit 2 can be used for other products. For example, in dashed lines, an alternative educt 5 having an educt quality parameter $x2$ is depicted. the batch process then leads to an alternative product 6 having product quality parameters $Q_2$. It is desirable to predict the impact of the educts 3, 5 and applied process parameters y on the products 4, 6 and in particular their product quality parameters. This problem can be written as:

$$(\mathbf{x}, \mathbf{y}_j) \mapsto Q_j(\mathbf{x}, \mathbf{y}_j)$$

(equation 1)

where $j$ stands for the $j$-th product of all potential products $\{1, 2,...p\}$ in this disclosure. A model or simulation of the batch process needs to map the combination of educt quality parameters x and process parameters $\mathbf{y}_j$ onto the product quality parameter $Q_j$ for each product j. The input vector $\mathbf{x}$ describes quality measurements of educts, for example substance concentrations, viscosity measuremens, color parameters or the like. The input vector $\mathbf{y}_j$ refers to process parameters, that can be measured during the production of the product in the reactor 2. One may can contemplate of time series features, such as maximum, minima or mean values or physical observables like temperature or pressure values as process parameters. The output product quality parameter $Q_j$ is a scalar and describes a desired quality of the product $j$.

Fig. 2 shows a schematic diagram of a first embodiment of an ANN system implemented to model or simulate the batch process, for example implemented in reactor 2 of Fig. 1. The ANN system 7 comprises a first ANN 9 and a second ANN 10. The underlying ANN models or regressors are labeled ANN1 and $ANN2_1$. The ANNs 9, 10 are, for example, shallow ANNs having an input layer with input nodes for receiving input data and an output layer having output nodes for outputting output data. The configuration of the ANNs 9, 10 is defined by configuration data including bias values and weight values for each node in the respective ANN (not shown).

The first ANN 9 receives the educt quality parameters $x_i$ for educts involved in producing the desired product having a predetermined product quality parameter $Q_j$. The first ANN 9 outputs an educt impact parameter $R_i$ to an input node of the second ANN 10. The second ANN 10 further receives the process parameters $y_j$ for product $j$ in the reactor 2. The second ANN 10 outputs the predicted quality parameter $Q_j$. Hence, the embodiment of an ANN system 7 maps the educt quality parameters $x_i$ and process parameters $y_j$ onto the product quality parameter $Q_j$. It is assumed that the problem depicted in equation 1 can be written as:

$$Q_j(\mathbf{x}, \mathbf{y}_j) = \tilde{Q}_j(f(\mathbf{x}), g_j(\mathbf{y}_j))$$

(equation 2).

Equation 2 assumes that the mappings or functions for the product quality parameters $Q_j$ are separable, wherein function $f$ depends on the educt quality parameters $x_i$ and function $g$ on the process parameters $\mathbf{y}_j$. It is an advantage if the educt quality parameters $x_i$ influence the reaction kinetics according to the process in the reactor in a similar way. The ANN system 7 in Fig. 2 solves a regression problem that can be written as:

$$\min_{\mathbf{w}, \mathbf{b}} C(\mathbf{X}; \mathbf{w}, \mathbf{b})) = (Q(\mathbf{X}) - \hat{P}(\mathbf{X}; \mathbf{w}, \mathbf{b}))^2$$

(equation 3)

wherein $\hat{P}(X; w,b)$ refers to the regressor for the true value $Q_j$. The regressor $\hat{P}(X; w,b)$ refers to the model implemented by the trained ANNs 9, 10, wherein w refers to the weights used within the neural networks 9, 10, and b to the bias values used to implement the nodes within the ANNs 9, 10. X includes the educt quality and process parameters.

Generally, the ANN system 7 shown in Fig. 2 is capable of simulating the batch process or reactor 2, respectively. The configuration of the ANN system 7 in terms of a first and a second ANN 9, 10 dedicated to modeling the influence of educt quality parameters $x_i$ on the one hand (ANN1) and the influence of process parameters $y_j$ on the other hand ($ANN2_1$) allows for an efficient training and set-up of the configuration data for the ANNs 9, 10.

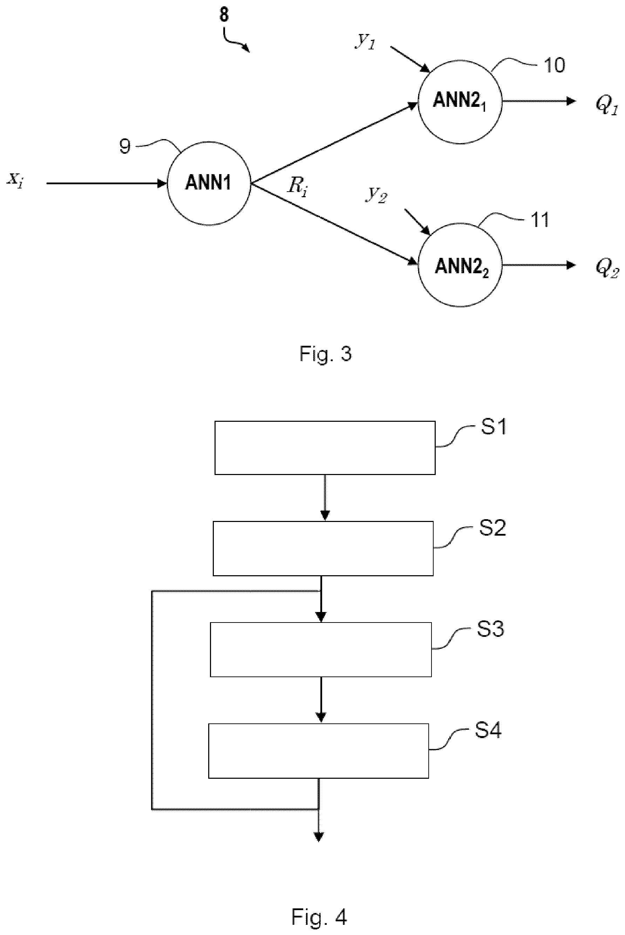

Fig. 3 shows a schematic diagram of a second embodiment of an ANN system 8. The ANN system 8 includes a first ANN 9 and two second ANNs 10, 11 that are labeled as $ANN2_1$ and $ANN2_2$. The labels refer to the model that is implemented through the ANN configuraton data, i.e. the biases and weights and number of nodes and their topology. The first second ANN 10 receives the educt impact parameter $R_i$ from the first ANN 9 and process parameters $y_1$ that describe or characterize the batch process leading to product $j=1$ having the product quality parameter $Q_1$. The other second ANN 11 receives alternative process parameters $y_2$ characterizing the process leading to alternative product $j=2$ having the product quality parameter $Q_2$. Models ANN1, $ANN2_1$ and $ANN2_2$ are implemented as shallow neural networks, for example Baysian-typ neural networks, which dispense with the need for the validation of data sets when training.

Fig. 4 shows a flowchart involving steps for training the ANN system 7, 8 shown in Fig. 2 or 3. In a first step S1, the

ANN2$_1$ and ANN2$_2$ models are trained separately from one another, for example deploying a Bayesian training method. A respective training data set for ANN2$_1$ includes process parameters $y_1$ and predetermined product quality parameters $Q_i$ as target variables. A plurality of training data sets can be used for each product $j$. In step S1, the same training process occurs for model ANN2$_2$, wherein the process parameters $y_2$ are included as target variables designed or measured product quality parameters $Q_2$ are deployed. For example, due to a limited amount of training data and the missing educt impact input, models ANN2$_1$ and ANN2$_1$ will produce residuals or errors in their quality prediction.

In a next step S2, the residuals of the target variables, i.e. $Q_1$ and $Q_2$, are calculated.

Next, in step S3, the ANN model ANN1 is trained based on training data sets that include the educt quality parameters $x_i$, and, as target variable for the training of the residuals obtained in step S2. The training of ANN1 in step S3 occurs for all available products j. Hence, the influence of the educt quality parameters and the influence of various process parameters are separated within the ANN model architecture. It is an advantage that the ANN modeling or predicting the impact of the educt parameters can be trained by a larger data set stemming from the processing of the first product along $y_i$ and the second product along $y_2$. One may contemplate considering training data sets for the educt model ANN1 for further batch processes leading to further products.

In the next step S4, the second ANNs implementing models ANN 2$_1$ and ANN 2$_2$ are retrained. The additional training in step S3 uses additional input off the predicted residuals obtained from the first model ANN1. Hence, the accuracy of the prediction of the product quality parameters $Q_1$ and $Q_2$ are further improved.

In embodiments, the steps S3 and S4 are performed repeatedly. Due to the architecture of the ANN system 7, 8, sparse training data sets can be handled and still allow for a robust blackbox model for controlling a batch plant. In particular, in multiple product batch plants, the ANN configuration data may be reused or recycled if shared or often used educts are deployed.

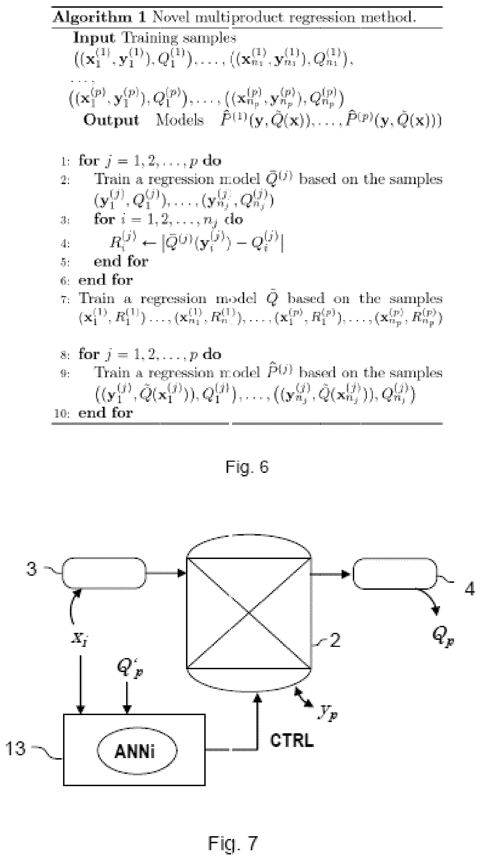

Fig. 7 shows a schematic diagram of an embodiment for a control system for a batch plant using the ANN systems 7, 8 or improvements thereof. Fig. 7 shows a control device 13 coupled to a batch plant, as for example shown in Fig. 1. Like or similar reference numerals are used and not expressly explained again. The control device 13 receives educt quality parameters $x_i$ and predetermined product quality parameters $Q'_p$, where the predetermined product quality parameters refer to a desired quality of the product that is produced by the reactor 2. The reactor 2 is operated and/or characterized by process parameters $y_p$ for the specific product $p$. The control device 16 is, for example, a computer-implemented device that performs operations implementing an ANN system as disclosed before or in the following. The control device 13 further carries out an optimization algorithm such that an observed quality parameter $Q_p$ for the product matches with the predetermined product quality according to the product quality parameter $Q'_p$. Next, various aspects of simulating/controlling a plant shown in Fig. 7 are elaborated.

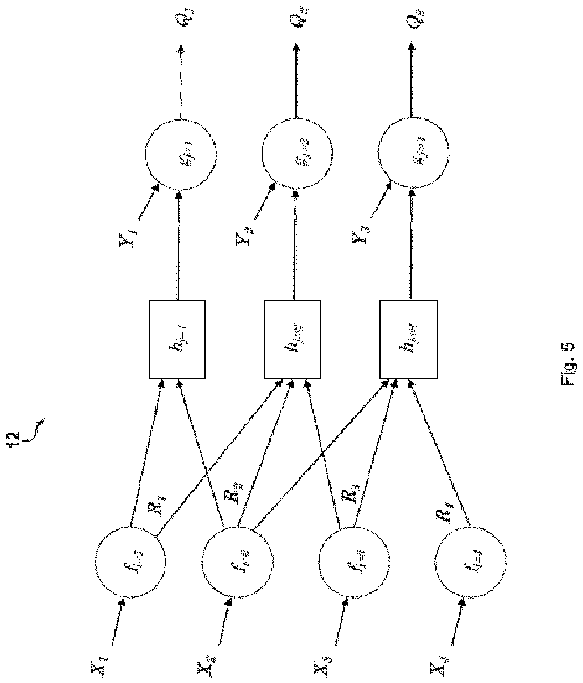

Fig. 5 shows an ANN system or set-up or architecture capable of simulating a variety of products having product quality parameters $Q_1$, $Q_2$ and $Q_3$ based on a plurlity of educts and their associated educt quality parameters $X_{1,2,3,4}$. $f_{1,2,3,4}$ refers to the ANN educt model corresponding to the first ANNs, for example in Fig. 3, ANN1, and $g_{1,2,3}$ refers to process models implemented by the second ANNs (e.g. ANN2$_1$ and ANN2$_2$ in Fig. 3). $h_{1,2,3}$ refers to linear regressors that model the chemical reaction involving a sample of educts. For example, regressor $h_1$ receives the output from educt models $f_1$ and $f_2$. One may generalize the architecture shown in Fig. 5 having a plurality of first ANNs instead of only four indicated by $f_1$, $f_2$, $f_3$ and $f_4$, and corresponding to an educt characterized by educt quality parameters $X_1$, $X_2$, $X_3$ and $X_4$, respectively. Then a plurality of second ANNs of which three are labeled by $g_1$, $g_2$ and $g_3$ receive the combination of weighted educt impact parameters $R_1$, $R_2$, $R_3$ and $R_4$ and specific process parameters $y_1$, $y_2$, $y_3$ corresponding to the batch process leading to a respective product 1, 2, 3 having associated product quality parameters $Q_1$, $Q_2$, $Q_3$. Generally, one may consider $j = 1...p$ products and $i = 1...m$ educts.

A representation of a general algorithm using regression models based on ANNs is shown in Fig. 6. The algorithm 1 shown in Fig. 6, in particular, provides for a training method for a generalized ANN architecture based on the ANN systems 7, 8 and 12. It is assumed that there are $n_j$ samples or data sets of a production process for product $j$. The input parameters for the model are labeled as equation 4:

$$\left(\mathbf{x}_1^{(j)}, \mathbf{y}_1^{(j)}\right), \left(\mathbf{x}_2^{(j)}, \mathbf{y}_2^{(j)}\right), \ldots, \left(\mathbf{x}_{n_j}^{(j)}, \mathbf{y}_{n_j}^{(j)}\right)$$

$$(equation\ 4)$$

leading to corresponding target variables:

$$Q_1^{(j)}, Q_2^{(j)}, \ldots, Q_{n_j}^{(j)}.$$

(equation 5)

As a result of the training algorithm, regressors or ANN models

$$\hat{P}^{(1)}(\mathbf{y}, \tilde{Q}(\mathbf{x})), \ldots, \hat{P}^{(p)}(\mathbf{y}, \tilde{Q}(\mathbf{x})))$$

(equation 6)

are obtained. $\hat{P}^{(j)}$ stands for configuration data in terms of weights and biases for the individual ANNs used for simulating a specific batch process.

In lines 1 to 6 of algorithm 1 shown in Fig. 6, ANN models $\overline{Q}^{(j)}$ are obtained. Training of $\overline{Q}^{(j)}$ is based on the process parameter trainings sets y and the product quality parameter as target variable. This leads to residuals indicated in line 4 of algorithm 1. Hence, the model residuals of $\overline{Q}^{(j)}$ stemming from the process parameters are combined in a single data set for training the ANN models referring to the educts. The educt training occurs in line 7 taking educt quality parameter data for training as well as the obtained residuals from line 4.

Next, for all products $p$ in lines 8 to 10 of algorithm 1, the regression model $\hat{P}^{(j)}$ according to equation 4 is obtained.

Investigations of the applicant show that a suitable ANN architecture for the first and second ANN models are single hidden layer neural networks trained by Bayesian regulation. Hence, an efficient neural network-based simulation method and control capabilities for batch plants are obtained. Software libraries for implementing the disclosed ANN models and their training are available in a in a computer-implemented fashion. For example, one may refer to the MATLAB Deep Learning Toolbox for configuring and operating the ANNs disclosed herein.

It is an advantage of the disclosed methods and systems that a prediction of product qualities is available even if only sparse data sets are available. Investigations of the applicant show that simulation of batch plants based on the disclosed approach reaches accuracies similar or better than what is obtained from whitebox models if they are available. Hence, a flexible and efficient tool for simulating, predicting and controlling chemical processes, for example deployed in batch processing, is provided.

Allthough, simulations of batch plant operations are disclosed using ANNs in ANN systems the invention is not limited to such regressors. One may contemplate of alternative configurations of regression systems to perform regression, e.g. involving gaussian processes, linear regression, elastic net regularizaiton models or the like. E.g. any ANN in this disclosure may be replaced by a suitable regressor unit. **It** is understood that the regressors may be implemented as software services, hardware units or distributed computer networks.

Used reference signs

| | |
|---|---|
| 1 | batch plant |
| 2 | reactor |
| 3, 5 | educt |
| 4, 6 | product |
| 7, 8, 12 | ANN system |
| 9, 10, 11 | ANN |
| 13 | control device |
| | |
| S1 | training second ANNs |
| S2 | calculating residuals |
| S3 | training first ANN |
| S4 | retraining second ANNs |

**Claims**

1. A computer-implemented regressor (7) for simulating, monitoring and/or controlling a plant (1), wherein the plant (1) is implemented:

to receive one or more educts (3, 5) having associated educt quality parameters ($x_1$, $x_2$),
to process said educt(s) (3, 5) wherein the process has associated process parameters (y), and
to output a product (4, 6) having associated product quality parameters ($Q_1$, $Q_2$);
and the regressor (7) comprises:
at least two regressor units (9, 10), each regressor unit (9, 10) comprising:

an input for receiving input data, and
an output for outputting output data,
wherein:

a first regressor unit (9) is implemented to receive only said educt quality parameters ($x_i$) and to output at least one educt impact parameter ($R_1$); and
a second regressor unit (10) is implemented to receive said educt impact parameter ($R_1$) and said process parameters ($y_j$) and to output at least one product quality parameter ($Q_j$); and
the first and the second regressor unit (9, 10) are based on machine-learning principles.

2. The regressor of claim 1, wherein the first and second regressor units (9, 10) are artificial neural networks ("ANN") (9, 10), each including an input layer having input nodes for receiving input data, and an output layer having output nodes for outputting output data, wherein
the second ANN (10) is trained based on training data sets including process parameters and product target variables corresponding to a product quality parameter associated to a respective product.

3. The regressor of claim 2, wherein the first ANN (9) is trained based on training data sets including the educt quality parameters and a residual of the trained second ANN (10) as target variable for the educt impact parameter, both corresponding to the respective product.

4. The regressor of any one of claims 1 - 3, comprising:

a plurality of first ANNs, wherein each ANN of the first ANNs corresponds to an educt and is implemented to receive corresponding educt quality parameters ($X_{i=1...4}$) and to output at least one corresponding educt impact parameter ($R_{i=1...4}$); and
a plurality of second ANNs, wherein each ANN of the second ANNs corresponds to a process for producing a product and is implemented to receive corresponding process parameters ($Y_{j=1...3}$) and a combination of educt impact parameters ($R_{i=1...4}$) from the first ANNs, and to output a corresponding product quality parameter ($Q_{j=1...3}$).

5. The regressor of any one of claims 2 - 4, wherein at least one of the ANNs is a feed forward ANN, a Baysian neural network and/or at least one of the ANNs further comprises hidden nodes.

6. The regressor of any one of claims 1 - 5, wherein said educt quality parameters include at least one of a viscosity value, a hydroxyl value, a concentration value, and a color parameter.

7. **The regressor** of any one of claims 1 - 6, wherein said process parameters ($yj$) include at least one of a measured observable, a temperature value, a maximum temperature value, a time span, a reaction time, a storage time of a catalyst, a number of free isocyanate (NCO) groups, and characteristics of a time series.

8. The regressor of any one of claims 1 - 7, wherein said product quality parameters ($Q_j$) include at least one of a viscosity value, a hardness value, a roughness value, drug interaction, a pH value, and a solubility.

9. A control device (13) for controlling a plant (2), wherein the plant (2) is implemented:

to receive one or more educts having associated educt quality parameters ($x_i$),
to process said educt(s) wherein the process has associated process parameters ($y_j$), and
to output a product having associated product quality parameters ($Q_j$);
wherein the control device (13) comprises a regressor (1, 7, 8, 12) of any one of claims 1 - 8, wherein the control device (13) is implemented to adapt the process as a function of the product quality parameter ($Q_j$) output from the regressor unit (10) in response to adapted process parameters.

10. The control device of claim 9, wherein the control device (13) comprises a computer processing device implemented to perform operations implementing the regressor (1, 7, 8, 12) and to carry out an optimization algorithm for adapting process parameters such that the product quality parameters ($Q_j$) output from the regressor unit (10) cor- respond to a predetermined product quality.

11. A **method** for training the regressor of any one of claims 1 - 10, wherein the regressor units (9, 10) are machine learning units, the method comprising:

providing for a first and at least one second product ($j$=1...$p$), a plurality of $n_p$ training data sets, each training data set including educt quality parameters ($x$), process parameters ($y$) and a product target variable (Q) corresponding to a product quality parameter associated to the product ($j$);
training the second regressor unit (10) and/or a third regressor unit based on training data subsets including the process parameters ($y$) and the product target variables (Q), corresponding to a first product ($j$=1), thereby obtaining a first residual (R) for each training data subset;
training the regressor unit (10) based on training data subsets including the process parameters ($y$) and the product target variables (Q), corresponding to at least one further product ($j\neq1$), thereby obtaining a second residual (R) for each training data subset; and
training the first regressor unit (9) based on training data subsets including the educt quality parameters ($x$) and the residual (R) as target variable for the educt impact parameter, both corresponding to the first product ($j$=1), and on further training data subsets including the educt quality parameters ($x$) and the residual (R) as target variable for the educt impact parameter, both corresponding to the at least one further product ($j\neq1$).

12. The method of claim 11, further comprising:
for each product ($j$), training the second regressor unit (10) based on training data subsets including the process parameters ($y$), the educt impact parameter output from the trained first ANN (9) in response to the educt quality parameters (x) associated to the educt used for producing the respective product, and the product target variable (Q) corresponding to the product quality parameter associated to the respective product.

13. The method of claim 12, wherein the step of training the first regressor unit (9) and the step of training the second regressor unit (10) of claim 12 are repeatedly carried out.

14. The method of any one of claims 11 - 13, further comprising:

generating said training data sets by operating the plant (1) and measuring process parameters and product quality parameters; and/or
generating said training data sets deploying a whitebox-numerical model for simulating a plant process based on educt quality parameters and generating process parameters, and product quality parameters.

15. A method for simulating, monitoring and/or controlling a plant (1), wherein the plant (1) is implemented:

to receive one or more educts (3, 5) having associated educt quality parameters ($x_i$),
to process said educt(s) wherein the process has associated process parameters ($y_j$), and
to output a product (4, 6) having associated product quality parameters ($Q_j$);
and the method comprises:
using a regressor (7, 8, 12) of any one of claims 1 - 10, wherein the regressor (7, 8, 12) is trained according to the method of any one of claims 11 - 14.

**Patentansprüche**

1. Computerimplementierter Regressor (7) zum Simulieren, Überwachen und/oder Steuern einer Anlage (1), wobei die Anlage (1) implementiert ist:

ein oder mehrere Edukte (3, 5) zu empfangen, denen Eduktqualitätsparameter ($x_1$, $x_2$) zugeordnet sind,
das Edukt bzw. die Edukte (3, 5) zu verarbeiten, wobei dem Prozess Prozessparameter ($y$) zugeordnet sind, und
ein Produkt (4, 6) auszugeben, dem Produktqualitätsparameter ($Q_1$, $Q_2$) zugeordnet sind;
wobei der Regressor (7) Folgendes umfasst:

mindestens zwei Regressoreinheiten (9, 10), wobei jede Regressoreinheit (9, 10) Folgendes umfasst:

einen Eingang zum Empfangen von Eingangsdaten und
einen Ausgang zum Ausgeben von Ausgangsdaten,
wobei:

eine erste Regressoreinheit (9) implementiert ist, lediglich die Eduktqualitätsparameter ($x_i$) zu empfangen und mindestens einen Edukteinflussparameter ($R_1$) auszugeben; und
eine zweite Regressoreinheit (10) implementiert ist, den Edukteinflussparameter ($R_1$) und die Prozessparameter ($y_j$) zu empfangen und mindestens einen Produktqualitätsparameter ($Q_j$) auszugeben; und
die erste und die zweite Regressoreinheit (9, 10) auf Prinzipien des maschinellen Lernens beruhen.

2. Regressor nach Anspruch 1, wobei die erste und die zweite Regressoreinheit (9, 10) künstliche neuronale Netze ("ANN") (9, 10) sind, die jeweils eine Eingangsschicht mit Eingangsknoten zum Empfangen von Eingangsdaten und eine Ausgangsschicht mit Ausgangsknoten zum Ausgeben von Ausgangsdaten enthalten, wobei das zweite ANN (10) auf der Grundlage von Trainingsdatensätzen trainiert wird, die Prozessparameter und Produktsollvariablen, die einem Produktqualitätsparameter entsprechen, der einem jeweiligen Produkt zugeordnet ist, enthalten.

3. Regressor nach Anspruch 2, wobei das erste ANN (9) auf der Grundlage von Trainingsdatensätzen trainiert wird, die die Eduktqualitätsparameter und einen Restwert des trainierten zweiten ANN (10) als Sollvariable für den Edukteinflussparameter enthalten, die beide dem jeweiligen Produkt entsprechen.

4. Regressor nach einem der Ansprüche 1-3, der Folgendes umfasst:

mehrere erste ANN, wobei jedes ANN der ersten ANN einem Edukt entspricht und implementiert ist, entsprechende Eduktqualitätsparameter ($X_{i=1...4}$) zu empfangen und mindestens einen entsprechenden Edukteinflussparameter ($R_{i=1...4}$) auszugeben; und
mehrere zweite ANN, wobei jedes ANN der zweiten ANN einem Prozess zum Herstellen eines Produkts entspricht und implementiert ist, entsprechende Prozessparameter ($Y_{j=1...3}$) und eine Kombination der Edukteinflussparameter ($R_{i=1...4}$) von den ersten ANN zu empfangen und einen entsprechenden Produktqualitätsparameter ($Q_{j=1...3}$) auszugeben.

5. Regressor nach einem der Ansprüche 2-4, wobei mindestens eines der ANN ein Vorwärtskopplungs-ANN, ein Bayes'sches neuronales Netz ist und/oder mindestens eines der ANN ferner verborgene Knoten umfasst.

6. Regressor nach einem der Ansprüche 1-5, wobei die Eduktqualitätsparameter einen Viskositätswert und/oder einen Hydroxyl-Wert und/oder einen Konzentrationswert und/oder einen Farbparameter enthalten.

7. Regressor nach einem der Ansprüche 1-6, wobei die Prozessparameter ($y_j$) eine gemessene Observable und/oder einen Temperaturwert und/oder einen Maximaltemperaturwert und/oder eine Zeitdauer und/oder eine Reaktionszeit und/oder eine Speicherzeit eines Katalysators und/oder eine Anzahl freier IsocyanatGruppen (NCO-Gruppen) und/oder Eigenschaften einer Zeitreihe enthalten.

8. Regressor nach einem der Ansprüche 1-7, wobei die Produktqualitätsparameter ($Q_j$) einen Viskositätswert und/oder einen Härtewert und/oder einen Rauigkeitswert und/oder eine Medikamentenwechselwirkung und/oder einen pH-Wert und/oder eine Löslichkeit enthalten.

9. Steuervorrichtung (13) zum Steuern einer Anlage (2), wobei die Anlage (2) implementiert ist:

ein oder mehrere Edukte zu empfangen, denen Eduktqualitätsparameter ($x_i$) zugeordnet sind,
das Edukt bzw. die Edukte zu verarbeiten, wobei dem Prozess Prozessparameter ($y_j$) zugeordnet sind, und
ein Produkt auszugeben, dem Produktqualitätsparameter ($Q_j$) zugeordnet sind;
wobei die Steuervorrichtung (13) einen Regressor (1, 7, 8, 12) nach einem der Ansprüche 1-8 umfasst, wobei die Steuervorrichtung (13) implementiert ist, den Prozess als eine Funktion des Produktqualitätsparameters ($Q_j$), der von der Regressoreinheit (10) als Antwort auf angepasste Prozessparameter ausgegeben wird, anzupassen.

10. Steuervorrichtung nach Anspruch 9, wobei die Steuervorrichtung (13) eine Computer-Verarbeitungsvorrichtung umfasst, die implementiert ist, Vorgänge durchzuführen, die den Regressor (1, 7, 8, 12) implementieren, und einen Optimierungsalgorithmus zum Anpassen von Prozessparametern, derart, dass die Produktqualitätsparameter ($Q_j$), die von der Regressoreinheit (10) ausgegeben werden, einer vorgegebenen Produktqualität entsprechen, auszuführen.

11. Verfahren zum Trainieren des Regressors nach einem der Ansprüche 1-10, wobei die Regressoreinheiten (9, 10) Einheiten zum maschinellen Lernen sind, wobei das Verfahren Folgendes umfasst:

Bereitstellen für ein erstes und mindestens ein zweites Produkt (j = 1...p) einer Mehrzahl von $n_p$ Trainingsdatensätzen, wobei jeder Trainingsdatensatz Eduktqualitätsparameter (x), Prozessparameter (y) und eine Produktsollvariable (Q), die einem Produktqualitätsparameter entspricht, der dem Produkt (j) zugeordnet ist, enthält;

Trainieren der zweiten Regressoreinheit (10) und/oder einer dritten Regressoreinheit auf der Grundlage von Teiltrainingsdatensätzen, die die Prozessparameter (y) und die Produktsollvariablen (Q) enthalten, die einem ersten Produkt (j = 1) entsprechen, wodurch ein erster Restwert (R) für jeden Teiltrainingsdatensatz erhalten wird;

Trainieren der Regressoreinheit (10) auf der Grundlage von Teiltrainingsdatensätzen, die die Prozessparameter (y) und die Produktsollvariablen (Q) enthalten, die mindestens einem weiteren Produkt (j ≠ 1) entsprechen, wodurch ein zweiter Restwert (R) für jeden Teiltrainingsdatensatz erhalten wird; und

Trainieren der ersten Regressoreinheit (9) auf der Grundlage von Teiltrainingsdatensätzen, die die Eduktqualitätsparameter (x) und den Restwert (R) als Sollvariable für den Edukteinflussparameter enthalten, die beide dem ersten Produkt (j = 1) entsprechen, und von weiteren Teiltrainingsdatensätzen, die die Eduktqualitätsparameter (x) und den Restwert (R) als Sollvariable für den Edukteinflussparameter enthalten, die beide dem mindestens einen weiteren Produkt (j ≠ 1) entsprechen.

12. Verfahren nach Anspruch 11, das ferner Folgendes umfasst:

für jedes Produkt (j), Trainieren der zweiten Regressoreinheit (10) auf der Grundlage von Teiltrainingsdatensätzen, die die Prozessparameter (y), den Edukteinflussparameter, der vom trainierten ersten ANN (9) als Antwort auf die Eduktqualitätsparameter (x), die dem Edukt zugeordnet sind, das zum Herstellen des jeweiligen Produkts verwendet wird, ausgegeben wird, und die Produktsollvariable (Q), die dem Produktqualitätsparameter entspricht, der dem jeweiligen Produkt zugeordnet ist, enthalten.

13. Verfahren nach Anspruch 12, wobei der Schritt des Trainierens der ersten Regressoreinheit (9) und der Schritt des Trainierens der zweiten Regressoreinheit (10) nach Anspruch 12 wiederholt ausgeführt werden.

14. Verfahren nach einem der Ansprüche 11-13, das ferner Folgendes umfasst:

Erzeugen der Trainingsdatensätze durch Betreiben der Anlage (1) und Messen von Prozessparametern und Produktqualitätsparametern; und/oder

Erzeugen der Trainingsdatensätze, wobei ein numerisches White-Box-Modell zum Simulieren eines Anlagenprozesses auf der Grundlage von Eduktqualitätsparametern eingesetzt wird und Prozessparameter und Produktqualitätsparameter erzeugt werden.

15. Verfahren zum Simulieren, Überwachen und/oder Steuern einer Anlage (1), wobei die Anlage (1) implementiert ist:

ein oder mehrere Edukte (3, 5) zu empfangen, denen Eduktqualitätsparameter ($x_i$) zugeordnet sind, das Edukt bzw. die Edukte zu verarbeiten, wobei dem Prozess Prozessparameter ($y_j$) zugeordnet sind, und ein Produkt (4, 6) auszugeben, dem Produktqualitätsparameter ($Q_j$) zugeordnet sind; und wobei das Verfahren Folgendes umfasst:
Verwenden eines Regressors (7, 8, 12) nach einem der Ansprüche 1-10, wobei der Regressor (7, 8, 12) gemäß dem Verfahren nach einem der Ansprüche 11-14 trainiert wird.

## Revendications

1. Régresseur (7) mis en œuvre par ordinateur pour simuler, surveiller et/ou commander une installation (1), l'installation (1) étant mise en œuvre :

pour recevoir un ou plusieurs réactifs (3, 5) ayant des paramètres de qualité de réactif associés ($x_1$, $x_2$),
pour traiter lesdits un ou plusieurs réactifs (3, 5), le procédé ayant des paramètres de procédé associés (y), et
pour produire un produit (4, 6) ayant des paramètres de qualité de produit associés ($Q_1$, $Q_2$) ;
et le régresseur (7) comprend :
au moins deux unités de régresseur (9, 10), chaque unité de régresseur (9, 10) comprenant :

une entrée pour recevoir des données d'entrée, et
une sortie pour délivrer des données de sortie,
dans lequel :

une première unité de régresseur (9) est mise en œuvre pour recevoir uniquement lesdits paramètres de qualité des réactifs ($x_i$) et pour délivrer en sortie au moins un paramètre d'impact de réactif ($R_1$) ; et
une deuxième unité de régresseur (10) est mise en œuvre pour recevoir ledit paramètre d'impact de réactif ($R_1$) et lesdits paramètres de processus ($y_j$) et pour délivrer en sortie au moins un paramètre de qualité de produit ($Q_j$) ; et
les première et deuxième unités de régresseur (9, 10) sont basées sur des principes d'apprentissage automatique.

2. Régresseur selon la revendication 1, dans lequel les première et deuxième unités de régresseur (9, 10) sont des réseaux neuronaux artificiels (« ANN ») (9, 10), chacun incluant une couche d'entrée ayant des nœuds d'entrée pour recevoir des données d'entrée, et une couche de sortie ayant des nœuds de sortie pour délivrer en sortie des données de sortie,
dans lequel
le deuxième ANN (10) est entraîné sur la base d'ensembles de données d'apprentissage comprenant des paramètres de processus et des variables cibles de produit correspondant à un paramètre de qualité de produit associé à un produit respectif.

3. Régresseur selon la revendication 2, dans lequel le premier ANN (9) est entraîné sur la base d'ensembles de données d'apprentissage comprenant les paramètres de qualité des réactifs et un résidu du deuxième ANN entraîné (10) en tant que variable cible pour le paramètre d'impact de réactif, tous deux correspondant au produit respectif.

4. Régresseur selon l'une quelconque des revendications 1 à 3, comprenant :

une pluralité de premiers ANN, chaque ANN des premiers ANN correspondant à un réactif et étant mis en œuvre pour recevoir des paramètres de qualité de réactif correspondants ($X_{i=1\ldots4}$) et pour délivrer en sortie au moins un paramètre d'impact de réactif correspondant ($R_{i=1\ldots4}$) ; et
une pluralité de deuxièmes ANN, chaque ANN des deuxièmes ANN correspondant à un processus de production d'un produit et étant mis en œuvre pour recevoir des paramètres de processus correspondants ($Y_{j=1\ldots3}$) et une combinaison de paramètres d'impact de réactif ($R_{i=1\ldots4}$) à partir des premiers ANN, et pour délivrer en sortie un paramètre de qualité de produit correspondant ($Q_{j=1\ldots3}$).

5. Régresseur selon l'une quelconque des revendications 2 à 4, dans lequel au moins l'un des ANN est un ANN à propagation avant, un réseau de neurones Baysien et/ou au moins l'un des ANN comprend en outre des nœuds cachés.

6. Régresseur selon l'une quelconque des revendications 1 à 5, dans lequel lesdits paramètres de qualité de réactif comprennent au moins l'un d'une valeur de viscosité, d'une valeur d'hydroxyle, d'une valeur de concentration et d'un paramètre de couleur.

7. Régresseur selon l'une quelconque des revendications 1 à 6, dans lequel lesdits paramètres de procédé ($y_j$) comprennent au moins l'un d'un paramètre observable mesuré, d'une valeur de température, d'une valeur de température maximale, d'un intervalle de temps, d'un temps de réaction, d'un temps de stockage d'un catalyseur, d'un nombre de groupes isocyanates libres (NCO), et de caractéristiques d'une série temporelle.

8. Régresseur selon l'une quelconque des revendications 1 à 7, dans lequel lesdits paramètres de qualité du produit ($Q_j$) comprennent au moins l'une d'une valeur de viscosité, d'une valeur de dureté, d'une valeur de rugosité, d'une interaction médicamenteuse, d'une valeur de pH, et une solubilité.

**9.** Dispositif (13) de commande d'une installation (2), l'installation (2) étant mise en œuvre :

pour recevoir un ou plusieurs réactifs ayant des paramètres de qualité de réactif associés ($x_i$),
pour traiter lesdits un ou plusieurs réactifs, le procédé ayant des paramètres de procédé associés ($y_j$), et
pour délivrer en sortie un produit ayant des paramètres de qualité de produit associés ($Q_j$);
Dans lequel le dispositif de commande (13) comprend un régresseur (1, 7, 8, 12) selon l'une quelconque des revendications 1 à 8, dans lequel le dispositif de commande (13) est mis en œuvre pour adapter le processus en fonction du paramètre de qualité de produit ($Q_j$) de sortie de l'unité de régresseur (10) en réponse à des paramètres de processus adaptés.

**10.** Dispositif de commande selon la revendication 9, le dispositif de commande (13) comprenant un dispositif de traitement informatique mis en œuvre pour exécuter des opérations mettant en œuvre le régresseur (1, 7, 8, 12) et pour exécuter un algorithme d'optimisation pour adapter des paramètres de processus de telle sorte que les paramètres de qualité de produit ($Q_j$) délivrés en sortie par l'unité de régresseur (10) correspondent à une qualité de produit prédéterminée.

**11.** Procédé d'apprentissage du régresseur selon l'une quelconque des revendications 1 à 10, dans lequel les unités de régresseur (9, 10) sont des unités d'apprentissage automatique, le procédé comprenant les étapes suivantes :

fournir pour un premier produit et au moins un deuxième produit (j=1...p), une pluralité de $n_p$ ensembles de données d'apprentissage, chaque ensemble de données d'apprentissage comprenant des paramètres de qualité de réactif (x), des paramètres de processus (y) et une variable cible de produit (Q) correspondant à un paramètre de qualité de produit associé au produit (j) ;
entraîner la deuxième unité de régresseur (10) et/ou une troisième unité de régresseur sur la base de sous-ensembles de données d'apprentissage comprenant les paramètres de processus (y) et les variables cibles de produit (Q), correspondant à un premier produit (j=1), obtenant ainsi un premier résidu (R) pour chaque sous-ensemble de données d'apprentissage ;
entraîner l'unité de régresseur (10) sur la base de sous-ensembles de données d'apprentissage comprenant les paramètres de processus (y) et les variables cibles de produit (Q), correspondant à au moins un autre produit (j≠1), obtenant ainsi un deuxième résidu (R) pour chaque sous-ensemble de données d'apprentissage ; et
entraîner la première unité de régresseur (9) sur la base de sous-ensembles de données d'apprentissage comprenant les paramètres de qualité de réactif (x) et le résidu (R) comme variable cible pour le paramètre d'impact de réactif, tous deux correspondant au premier produit (j=1), et sur d'autres sous-ensembles de données d'apprentissage comprenant les paramètres de qualité de réactif (x) et le résidu (R) comme variable cible pour le paramètre d'impact de réactif, tous les deux correspondant à l'au moins un autre produit (j≠1).

**12.** Procédé selon la revendication 11, comprenant en outre l'étape suivante :
pour chaque produit (j), entraîner la deuxième unité de régresseur (10) sur la base de sous-ensembles de données d'entraînement comprenant les paramètres de processus (y), le paramètre d'impact de réactif délivré en sortie par le premier ANN entraîné (9) en réponse aux paramètres de qualité de réactif (x) associés au réactif utilisé pour produire le produit respectif, et la variable cible de produit (Q) correspondant au paramètre de qualité de produit associé au produit respectif.

**13.** Procédé selon la revendication 12, dans lequel l'étape d'apprentissage de la première unité de régresseur (9) et l'étape d'apprentissage de la deuxième unité de régresseur (10) selon la revendication 12 sont exécutées de manière répétée.

**14.** Procédé selon l'une quelconque des revendications 11 à 13, comprenant en outre les étapes suivantes :

produire lesdits ensembles de données d'apprentissage par l'exploitation de l'installation (1) et mesurer les paramètres de processus et les paramètres de qualité du produit ; et/ou
générer lesdits ensembles de données d'apprentissage en déployant un modèle numérique de boîte blanche pour simuler un processus d'installation sur la base de paramètres de qualité de réactif et générer des paramètres de processus, et des paramètres de qualité de produit.

**15.** Procédé de simulation, de surveillance et/ou de commande d'une installation (1), l'installation (1) étant mise en œuvre :

pour recevoir un ou plusieurs réactifs (3, 5) ayant des paramètres de qualité de réactif associés ($x_i$),
pour traiter lesdits un ou plusieurs réactifs, le procédé ayant des paramètres de procédé associés ($y_j$), et
pour produire un produit (4, 6) ayant des paramètres de qualité de produit associés ($Q_j$) ;
et le procédé comprenant :
l'utilisation d'un régresseur (7, 8, 12) selon l'une quelconque des revendications 1 à 10, le régresseur (7, 8, 12) étant entraîné selon le procédé de l'une quelconque des revendications 11 à 14.

Fig. 1

Fig. 2

Fig. 3

Fig. 4

Fig. 5

---

**Algorithm 1** Novel multiproduct regression method.

  **Input** Training samples

$$((\mathbf{x}_1^{(1)}, \mathbf{y}_1^{(1)}), Q_1^{(1)}), \ldots, ((\mathbf{x}_{n_1}^{(1)}, \mathbf{y}_{n_1}^{(1)}), Q_{n_1}^{(1)}),$$

$$\ldots,$$

$$((\mathbf{x}_1^{(p)}, \mathbf{y}_1^{(p)}), Q_1^{(p)}), \ldots, ((\mathbf{x}_{n_p}^{(p)}, \mathbf{y}_{n_p}^{(p)}), Q_{n_p}^{(p)})$$

  **Output** Models $\hat{P}^{(1)}(\mathbf{y}, \check{Q}(\mathbf{x})), \ldots, \hat{P}^{(p)}(\mathbf{y}, \check{Q}(\mathbf{x})))$

1: **for** $j = 1, 2, \ldots, p$ **do**
2:     Train a regression model $\bar{Q}^{(j)}$ based on the samples
      $(\mathbf{y}_1^{(j)}, Q_1^{(j)}), \ldots, (\mathbf{y}_{n_j}^{(j)}, Q_{n_j}^{(j)})$
3:     **for** $i = 1, 2, \ldots, n_j$ **do**
4:         $R_i^{(j)} \leftarrow |\bar{Q}^{(j)}(\mathbf{y}_i^{(j)}) - Q_i^{(j)}|$
5:     **end for**
6: **end for**
7: Train a regression model $\check{Q}$ based on the samples
   $(\mathbf{x}_1^{(1)}, R_1^{(1)}) \ldots, (\mathbf{x}_{n_1}^{(1)}, R_{n_1}^{(1)}), \ldots, (\mathbf{x}_1^{(p)}, R_1^{(p)}), \ldots, (\mathbf{x}_{n_p}^{(p)}, R_{n_p}^{(p)})$

8: **for** $j = 1, 2, \ldots, p$ **do**
9:     Train a regression model $\hat{P}^{(j)}$ based on the samples
      $((\mathbf{y}_1^{(j)}, \check{Q}(\mathbf{x}_1^{(j)})), Q_1^{(j)}), \ldots, ((\mathbf{y}_{n_j}^{(j)}, \check{Q}(\mathbf{x}_{n_j}^{(j)})), Q_{n_j}^{(j)})$
10: **end for**

---

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020227383 A1
- WO 2020058237 A2